# EUROPEAN PATENT SPECIFICATION

(11) **EP 2 258 601 B1**
(45) Date of publication and mention of the grant of the patent: **25.04.2018**
(21) Application number: 09161711.8
(22) Date of filing: 02.06.2009
(51) Int. Cl.: B62B 7/14

(54) **System and method for detachably mounting an infant carrier device on a support structure**
System und Verfahren zur lösbaren Montage einer Säuglingstragevorrichtung auf einer Haltestruktur
Système et procédé pour monter de manière amovible un dispositif de transport de nourrisson sur une structure support

(43) Date of publication of application: 08.12.2010
(73) Proprietor: Nuna International B.V., 1105 BJ Amsterdam (NL)
(72) Inventor: ten Horn, Vincent, 1105 BJ Amsterdam Zuidoost (NL); van Gelderen, Martijn Hans, 1105 BJ Amsterdam Zuidoost (NL); Homan, Maurits, 1105 BJ Amsterdam Zuidoost (NL); van der Schoor, Thomas, 1105 BJ Amsterdam Zuidoost (NL)
(74) Representative: Epping - Hermann - Fischer

(56) References cited:
- EP-A- 1 826 094
- BE-A5- 1 016 234
- US-A- 3 765 434
- US-A1- 2002 093 177

## Description

### Field of the Invention

The present invention generally relates to nursery devices for supporting a baby or young child occupant, and more particularly to a system and method for detachably mounting an infant carrier device on a support structure.

### Description of the Related Art

Various attachment systems are currently available for securing an infant seat carrier on a support structure such as a stroller. Generally, these attachment systems are fixed on support beams of the support structure, and include a fastener mechanism adapted to securely attach with a matching structure provided on the infant seat carrier. While the conventional fastener mechanism can provide secure coupling of the infant seat carrier on the support structure, certain disadvantages still call for improvement. Examples of the conventional fasteners are disclosed in Patent documents BE 1016234 A5 (this document represents the closest prior art), US 2002/0093177 A1 and EP 1826094 A1, which teach fasteners that are adjustable to accommodate various types of child seats. For example, the conventional fastener systems are relatively complex in structure, requiring the assembly of many component parts. Moreover, because the fastener system is usually embedded on the support structure, the volume occupied by the support structure may be increased, making its storage more troublesome. Additionally, conventional systems do not have any members to prevent accidental separation of the attachment member from the support structure.

Therefore, there is presently a need for a system and method that can detachably mount an infant carrier device on a support structure in a more flexible and cost-effective manner, and address at least the foregoing issues.

### SUMMARY

The present application describes a system and method that can detachably mount an infant carrier device on a support structure in a flexible and cost-effective manner.

According to one embodiment, the system comprises an attachment member adapted to securely fasten with a portion of a support beam provided in the support structure, and a bracket member movably coupled with the attachment sleeve for receiving the mount of an infant carrier. The bracket member can rotate about an axis substantially parallel with the support beam portion to reach either a deployed position or retracted position. In the deployed position, the bracket member is adapted to receive and support the mount of the infant carrier. In the retracted position, the bracket member facilitates storage of the support structure.

In a variant embodiment, the attachment member may comprise a first and second sleeve section that are pivotally coupled with each other. Accordingly, the first and second sleeve sections can either close on each other to tightly grip on the support beam portion, or open to facilitate removal of the attachment sleeve from the support beam portion.

At least one advantage of the system described herein is the ability to move the bracket member between a deployed position for receiving the mount of the infant carrier, and a retracted position reducing the volume occupied by the support structure. Moreover, if required, the system can also be easily removed from the support structure.

The foregoing is a summary and shall not be construed to limit the scope of the claims. The operations and structures disclosed herein may be implemented in a number of ways, and such changes and modifications may be made without departing from this invention as defined in the claims. Other aspects, inventive features, and advantages of the invention, as defined solely by the claims, are described in the non-limiting detailed description set forth below.

### BRIEF DESCRIPTION OF THE DRAWINGS

FIG. 1A is a schematic view illustrating one embodiment of the present invention implemented for mounting an infant carrier on a support structure;
FIG. 1B is a schematic view illustrating one embodiment of the support structure in a collapsed state;
FIG. 2A is an exploded view illustrating one embodiment of a bracket assembly used for detachably mounting an infant carrier on a frame section of the support structure;
FIG. 2B is a perspective view of the bracket assembly;
FIG. 2C is a perspective view illustrating the bracket assembly without a bracket member;
FIG. 2D is a schematic view illustrating the operation of the bracket member;
FIG. 2E is a schematic view illustrating how the bracket assembly is detached from a frame section;
FIG. 2F is a schematic view illustrating another configuration for detaching the bracket assembly from the frame section;
FIG. 2G is a perspective view of the configuration shown in FIG. 2F;
FIG. 3A is a perspective view of a variant embodiment of a bracket assembly adapted to self-lock when moved to a deployed position;
FIG. 3B is a schematic view illustrating a configuration in which the bracket member shown in FIG. 3A is rotated toward the attachment sleeve not yet locked; and
FIG. 3C is a schematic view illustrating the attachment sleeve being self-locked as the bracket member is rotated toward the attachment sleeve.

### DETAILED DESCRIPTION OF THE EMBODIMENTS

The present application describes a system and method for detachably mounting an infant carrier on a support structure. The system for mounting the infant carrier includes one or more bracket assembly that can detachably secure with a frame of the support structure. The bracket assembly includes a bracket member that is movable between a deployed position and a retracted position. In the deployed position, the bracket member is adapted to receive the placement of the infant carrier thereon. In the retracted position, the bracket member is disposed in a position that facilitates storage of the support structure. When desired, the bracket assembly can also be detached and removed from the frame of the support structure. Examples of the support structure may include a stroller, jogger, seat base, or the like. Examples of the infant carrier may include an infant seat, infant basket, cradle, or the like.

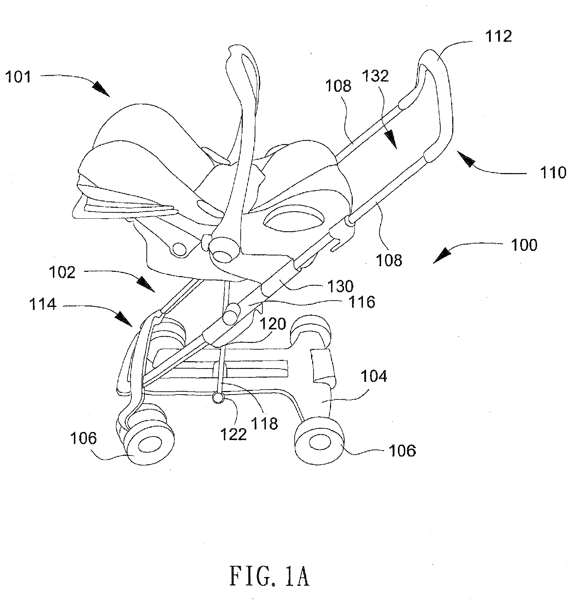

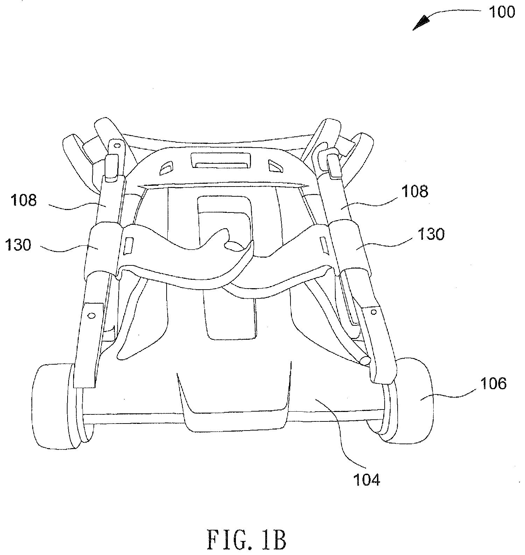

FIG. 1A is a schematic view illustrating one embodiment of the present invention implemented for mounting an infant carrier 101 on a support structure 100. The support structure 100 is exemplary a baby stroller, which can include a frame 102 assembled with a base 104. In one embodiment, the frame 102 and the base 104 may be made of rigid materials, such as metal, injection molded plastic materials, or a combination thereof. The base 104 can be formed as a relatively flat platform provided with a plurality of wheels 106 for displacement of the stroller support structure 100. The frame 102 may include two push bars formed as tubular segments 108 that are assembled parallel and spaced apart from each other. A first end 110 of each tubular segment 108 is coupled with a handle member 112, and a second end 114 of each tubular segment 108 is pivotally coupled with a front end of the base 104. In one embodiment, each tubular segment 108 may be formed by the assembly of multiple telescopic tube sections that can slide parallel for either shortening or deploying the tubular segment 108. An intermediary portion of each tubular segment 108 located a distance from the end 114 can be provided with a hinge 116 that is coupled with a support bar 118. Each support bar 118 may have a first end 120 movably coupled with the hinge 116, and a second end 122 pivotally coupled with the base 104. Each hinge 116 can be operable to lock and unlock the end 120 of each support bar 118. In a use configuration (FIG. 1A), the hinges 116 can lock the support bars 118 in an erected, substantially vertical position for supporting the two tubular segments 108 inclined relative to the base 104. When the hinges 116 are unlocked, the tubular segments 108 may be collapsed so that the frame 102 lies approximately parallel with the base 104 (FIG. 1B).

As shown in FIG. 1A, a portion of each tubular segment 108 proximate to the hinge 116 can be mounted with a bracket assembly 130. The bracket assemblies 130 can be movable between a deployed position (FIG. 1A) and a retracted position (FIG. 1B). In the deployed position, the bracket assemblies 130 are adapted to receive and support the placement of the infant carrier 101 through a gap 132 defined between the spaced-apart tubular segments 108. When no infant carrier is placed on the support structure 100, the bracket assemblies 130 may be operated so as to retract toward the gap132 between the tubular segments 108 (FIG. 1B). In this retracted position, the bracket assemblies 130 can lie substantially parallel to a plane passing through the two tubular segments 108, which can reduce the volume occupied by the support structure 100 and facilitate its storage.

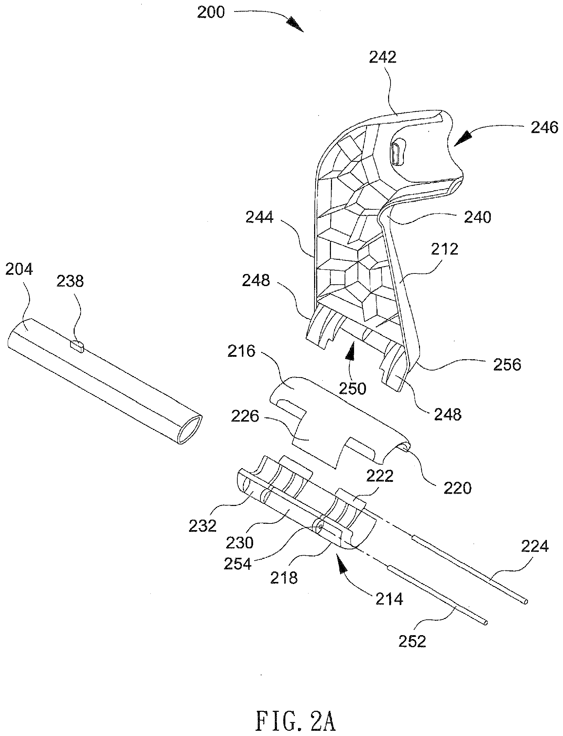

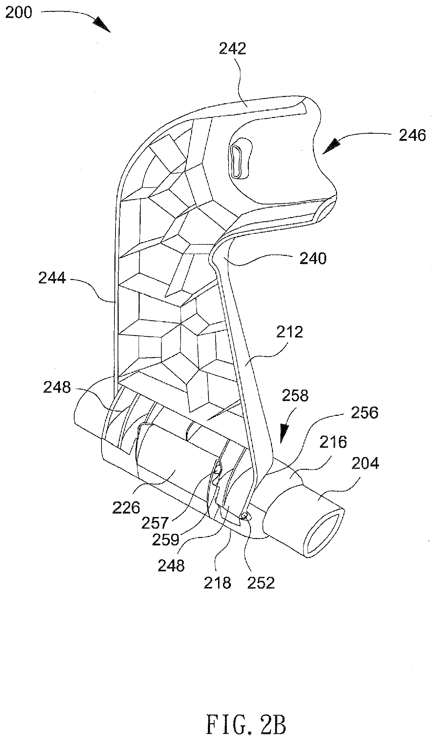

FIGs. 2A and 2B are respectively exploded and perspective views illustrating one embodiment of a bracket assembly 200 adapted to secure on a frame section 204. The bracket assembly 200 comprises a bracket member 212, and an attachment sleeve 214 adapted to securely mount on the frame section 204. The frame section 204 can be a section of either of the tubular segments 108 shown in FIG. 1A and 1B.

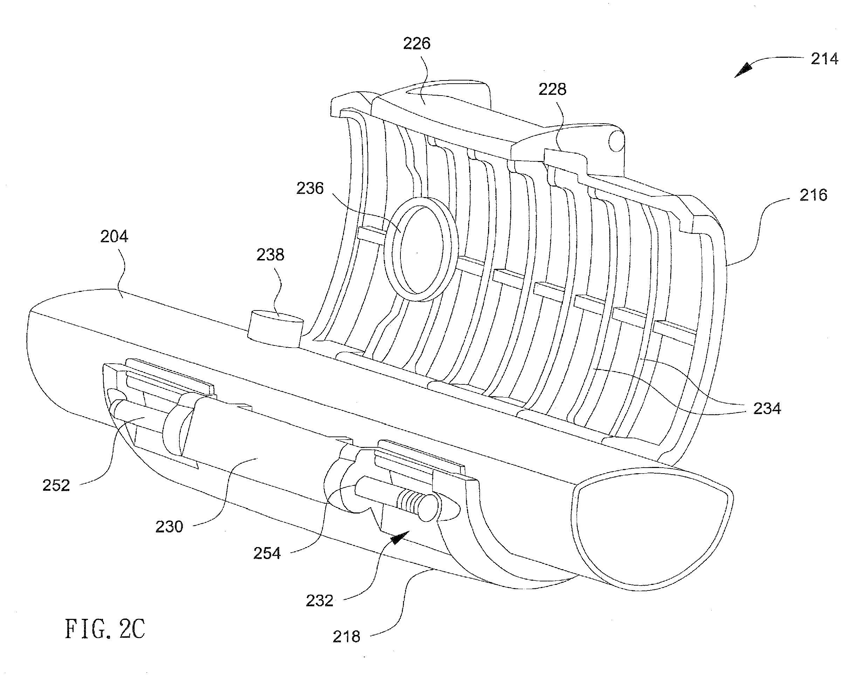

In conjunction with FIGs. 2A and 2B, FIG. 2C is a perspective view illustrating the structure of the attachment sleeve 214 in more details. As shown in FIGs. 2A through 2C, the attachment sleeve 214 is formed by two opposite sleeve sections 216 and 218, each of which has a profile that can fit with one half contour of the frame section 204. An edge portion 220 of the first sleeve section 216 is coupled with an edge portion 222 of the second sleeve section 218 via a pivotal link formed by a pin 224. The pivotal link formed by the pin 224 can define a pivotal axle that is substantially parallel with an axial direction of the frame section 204. Furthermore, a distal end of the first sleeve section 216 opposite the edge portion 220 is provided with a latch device, which may include a catch 226 having an inner recess 228 (shown in FIG. 2C) adapted to snap fit with a raised portion 230 provided on the second sleeve section 218. The first and second sleeve sections 216 and 218 can rotate about the pin 224 to either open or close on each other to define an inner volume adapted to enclose the frame section 204. After the first sleeve section 216 closes on the second sleeve section 218, the catch 226 can snap fit with the raised portion 230 to securely lock the first and second sleeve sections 216 and 218 in the closed position. A recessed surface 232 may also be formed proximate to each distal end of the raised portion 230 for stopping the bracket member 212 in the retracted position.

As shown in FIG. 2C, to ensure gripping of the attachment sleeve 214 on the frame section 204, an inner side of either of the sleeve section 216 and 218 may also be provided with multiple ribs 234 adapted to tighten the clamping action on the surface of the frame section 204. Either of the sleeve sections (for example, the first sleeve section 216) may also have an inner surface provided with an opening 236 that can engage with a protrusion 238 formed on the outer surface of the frame section 204 for blocking movement of the bracket assembly 200 relative to the frame section 204.

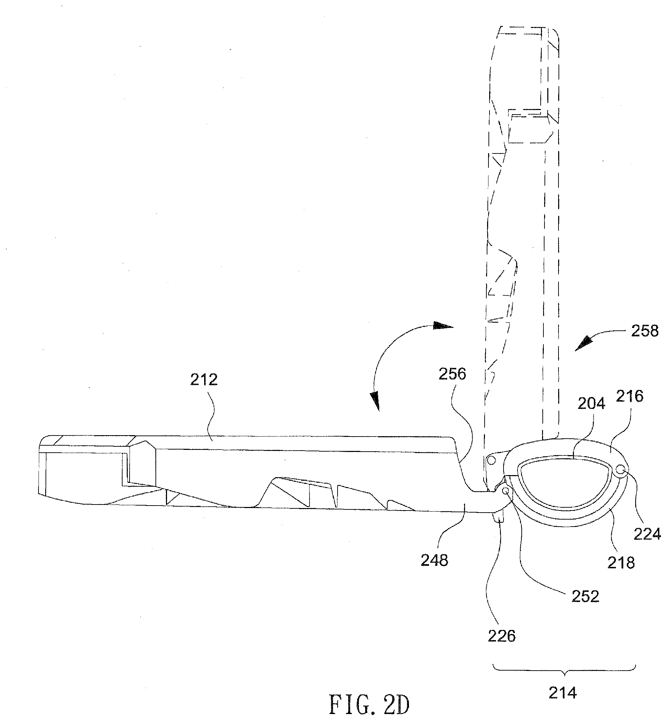

Referring again to FIGs. 2A, 2B and 2C, the bracket member 212 has a flat shape with an elbow portion 240 that divides the bracket member 212 into a front portion 242 and a rear portion 244. The front portion 242 can be provided with a notch 246 or like structure suitable for engaging with a matching structure provided on the infant carrier. A distal end of the rear portion 244 may include two flanges 248, and a recess 250 defined between the two flanges 248. A pin 252 passing through a hole 254 formed through the raised portion 230 is used to form a pivotal link that couples the flanges 248 of the bracket member 212 with the second sleeve section 218. The pivotal link formed by the pin 252 defines a rotation axle that can be substantially parallel with the axial direction of the frame section 204, and located at side opposite the pin 224. The rear end of the bracket member 212 can also include a stop surface 256 adjacent to the flanges 248. When the first and second sleeve sections 216 and 218 are closed on each other and the bracket member 212 is in the deployed position, the stop surface 256 can abut with a portion of the first sleeve section 216. More specifically, when the bracket member 212 is in the deployed position (shown with dashed lines in FIG. 2D) over the closed attachment sleeve 214, the stop surface 256 can be configured to wrap around a region of the first and second sleeve sections 216 and 218, and extend to a side 258 of the first sleeve section 216 that is opposite to the side of the second sleeve section 218. As a result, pivotal movement of the first sleeve section 216 away from the second sleeve section 218 can be blocked by the stop surface 256 when the bracket member 212 is in the deployed position. Accordingly, accidental opening of the attachment sleeve 214 can be prevented. In addition, ribs 257 formed at two sides of the catch 226 may engage within notches 259 formed on the flanges 248 for securely positioning the bracket member 212 relative to the attachment sleeve 214 (FIG. 2B). Undesirable displacement of the bracket member 212 can thus be prevented when the infant carrier is placed thereon.

In conjunction with FIGs. 2A through 2C, FIG. 2D is a schematic view describing an operation and use of the bracket assembly 200. In FIG. 2D, the deployed position of the bracket member 212 is shown with dashed lines, and the retracted position of the bracket member 212 is shown with solid lines. Before deploying the bracket member 212, the attachment sleeve 214 can be fastened on the frame section 204, locked by engagement of the catch 226 of the first sleeve section 216 with the raised portion 230 of the second sleeve section 218. The bracket member 212 can then be rotated about the pin 252 until the stop surface 256 abuts against the first sleeve section 216. In this deployed position, the catch 226 lies through the recess 250 between the two flanges 248, and the bracket member 212 is adequately oriented for receiving the placement of an infant carrier. In case the catch 226 is disengaged from the raised portion 230, the first sleeve section 216 still cannot be opened, blocked by at least the stop surface 256 of the bracket member 212 in the deployed position. Accordingly, accidental disengagement of the attachment sleeve 214 can also be prevented.

When no infant carrier is placed on the support structure, the bracket member 212 may be rotated in a reverse direction to reach the retracted position, causing the stop surface 256 to move away from the first sleeve section 216. Abutment between an outer surface of each of the flanges 248 and the recessed surface 232 on the second sleeve section 218 may be used to limit the rotation of the bracket member 212 after it reaches the retracted position.

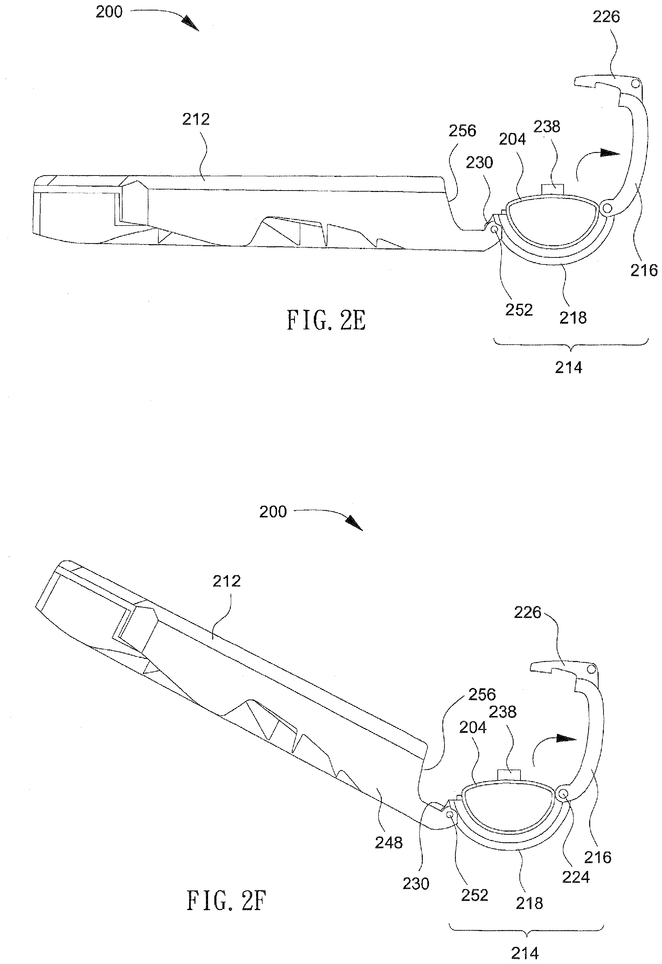

FIG. 2E is a schematic view illustrating a detachment of the bracket assembly 200 from the frame section 204. While the bracket member 212 is in the retracted position, a user may want to remove the bracket assembly 200 from the frame section 204. In this case, the user may disengage the catch 226 from the raised portion 230, and then open the first and second sleeve section 216 and 218. The bracket assembly 200 can then be removed from the frame section 204.

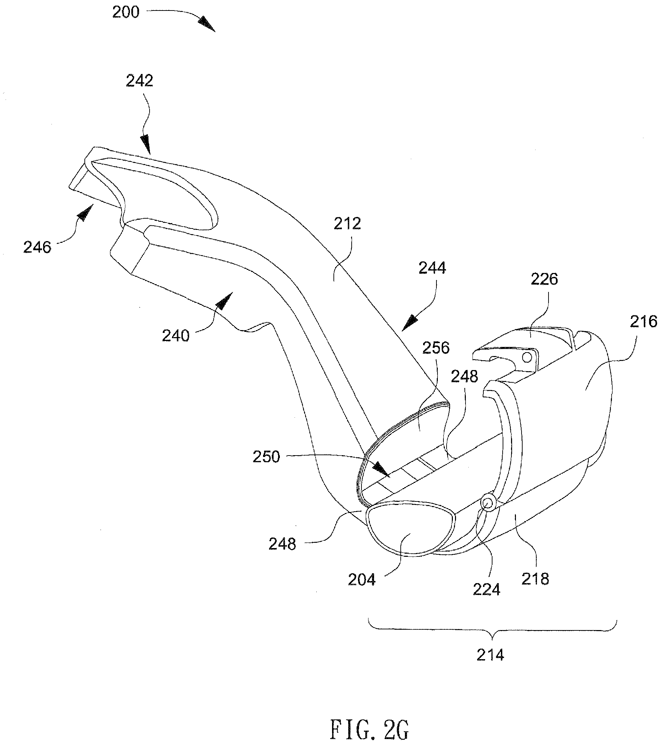

It is worth noting that the bracket member 212 does not need to be fully retracted for opening the attachment sleeve 214 and removing the bracket assembly 200. FIGs. 2F and 2G are respectively sectional and perspective views illustrating an intermediate position also adapted for dismounting the bracket assembly 200 from the frame section 204. When the bracket member 212 reaches an intermediate position between the deployed and retracted positions shown in FIG. 2D, the stop surface 256 of the bracket member 212 may be sufficiently spaced away from the first sleeve section 216 to allow its rotation in a direction away from the second sleeve section 218 for opening the attachment sleeve 214. The retracted position of the bracket member 212 as shown in FIG. 2E is thus not required for dismounting and removing the bracket assembly 200 from the frame section 204.

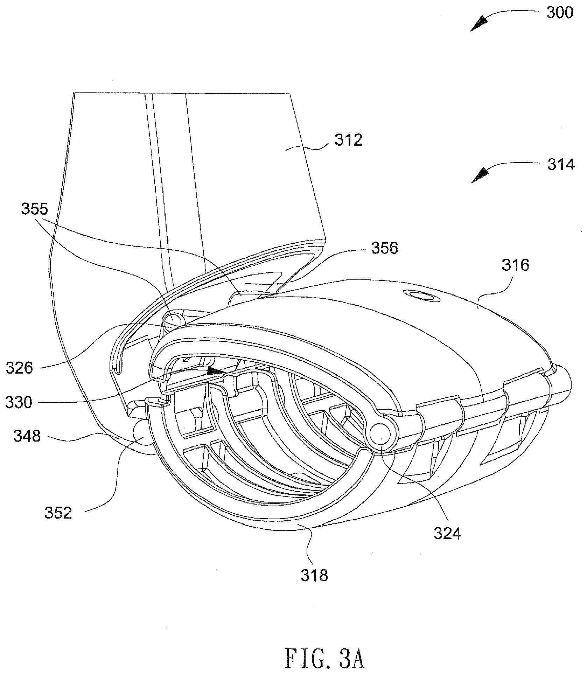

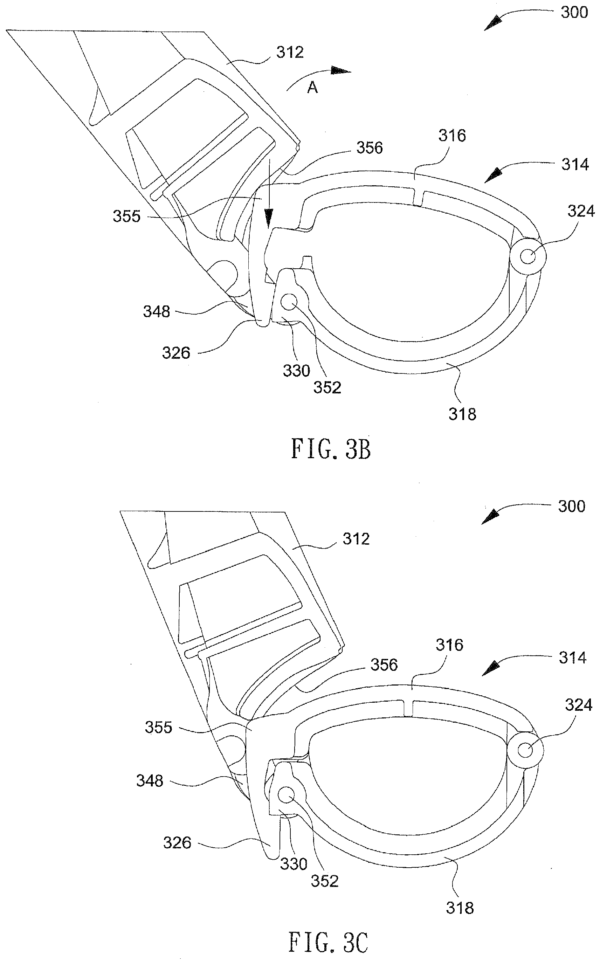

FIG. 3A is a schematic view illustrating a variant embodiment of a bracket assembly 300. Like the embodiment previously described, the bracket assembly 300 may include a bracket member 312, and an attachment sleeve 314 comprising a first sleeve section 316 and a second sleeve section 318 pivotally connected with each other via a pivot link 324. The first sleeve section 316 may have a latch formed by a catch 326 adapted to detachably lock with a raised portion 330 (more clearly shown on FIG. 3B) on the second sleeve section 318. In addition, the bracket member 312 can have flanges 348 pivotally coupled with the second sleeve section 318 via a pivotal link 352 passing through the raised portion 330. One additional feature of the bracket assembly 300 is a protrusion 355 that is provided on the first sleeve section 316. In one embodiment, the protrusion 355 may be formed on one side of the first sleeve section 316, more specifically at one distal end of the catch 326, that is opposite to the raised portion 330.

FIG. 3B illustrates a configuration in which the first and second sleeve sections 316 and 318 are closed on each other, but the catch 326 is not yet engaged and locked with the raised portion 330. As a user rotates the bracket member 312 in the direction A from the retracted position toward the deployed position, a stop surface 356 of the bracket member 312 can come in contact with the protrusion 355. As the bracket member 312 is rotated further, the stop surface 356 pushes the catch 326 downward (as shown by the vertical arrow) to engage with the raised portion 330. Accordingly, self-locking of the attachment sleeve 314 can be accomplished by rotating the bracket member 312 to the deployed position, as shown in FIG. 3C.

As described above, advantages of the system and method described herein include the ability to rotate the bracket member between a deployed position for receiving the mount of the infant carrier, and a retracted position for reducing the volume occupied by the support structure. In the deployed position, the bracket member can block and prevent accidental disengagement of the bracket assembly from the frame section of the support structure. Enhanced safety can therefore be provided when the bracket assembly is used for receiving the placement of the infant carrier.

Realizations in accordance with the present invention therefore have been described only in the context of particular embodiments. These embodiments are meant to be illustrative and not limiting. Many variations, modifications, additions, and improvements are possible. Accordingly, plural instances may be provided for components described herein as a single instance. Structures and functionality presented as discrete components in the exemplary configurations may be implemented as a combined structure or component. These and other variations, modifications, additions, and improvements may fall within the scope of the invention as defined in the claims that follow.

## Claims

1. A system including a support structure (100), and an infant carrier (101) adapted to be mounted on the support structure, wherein the support structure (100) includes two parallel tubular segments (108) spaced apart from each other, and the system further comprising an attachment member (214, 314) adapted to fasten with a section of one of the tubular segments (108), and a bracket member (212, 312) movably coupled with the attachment member (214, 314), **characterized in that** the bracket member (212, 312) is operable to rotate about an axis substantially parallel with a longitudinal direction of the section from a retracted position to a deployed position adapted to receive the mount of the infant carrier (101), wherein detachment of the attachment member (214, 314) from the section of the tubular segment is blocked by the bracket member (212, 312) when the bracket member (212, 312) is in the deployed position .

2. The system according to claim 1, wherein the support structure (100) includes a stroller.

3. The system according to any of claims 1 or 2, wherein the infant carrier (101) includes a child seat.

4. The system according to any of claims 1 through 3, **characterized in that** the attachment member (214, 314) comprises a first sleeve section (216, 316) and a second sleeve section (218, 318) pivotally coupled with each other through a first pivot link (224, 324).

5. The system according to claim 4, **characterized in that** the bracket member (212, 312) is pivotally coupled with the second sleeve section (218, 318) through a second pivot link (252, 352).

6. The system according to claim 5, **characterized in that** the second pivot link (252, 352) is located on a side of the second sleeve section (218, 318) opposite to the first pivot link (224, 324).

7. The system according to claim 5, **characterized in that** the attachment member (214, 314) includes a latch (226, 228, 230, 326, 330) adapted to lock the first sleeve section (216, 316) with the second sleeve section (218, 318) when the first and second sleeve sections are closed on each other by rotation about the first pivot link (224, 324).

8. The system according to claim 7, **characterized in that** the latch includes a raised portion (230, 330) on the second sleeve section (218, 318), and a catch (226, 326) formed on the first sleeve section (216, 316) and adapted to engage with the raised portion (230, 330).

9. The system according to claim 8, **characterized in that** the second pivot link (252, 352) is formed through the raised portion (230, 330).

10. The system according to claim 8, **characterized in that** when the bracket member (312) is rotated toward the attachment member (314), the bracket member (312) has a surface (356) that comes in contact with the first sleeve section (316) for pushing the catch (326) to engage with the raised portion (330).

11. The system according to claim 5, **characterized in that** when the bracket member (212, 312) is rotated to the deployed position for receiving placement of the infant carrier, a surface (256, 356) of the bracket member (212, 312) blocks opening of the first and second sleeve sections closed on each other.

12. The system according to claim 11, **characterized in that** the surface (256, 356) of the bracket member (212, 312) lies on a side of the first sleeve section (216, 316) opposite to the second sleeve section (218, 318) when the bracket member (212, 312) is in the deployed position.

13. The system according to claim 5, **characterized in that** when the bracket member (212, 312) is rotated to the retracted position, the surface (256, 356) of the bracket member (212, 312) is moved away from the first sleeve section (216, 316) to allow opening of the first and second sleeve sections.

14. A method for mounting an infant carrier on a support structure, wherein the support structure (100) includes two frame segments (108) parallel and spaced apart from each other, at least one of the two frame segments (108) being mounted with a bracket assembly that includes an attachment member (214, 314) secured with the frame segment (108), and a bracket member (212, 312) coupled with the attachment member (214, 314), the method comprising:
rotating the bracket member (212, 312) about an axis substantially parallel with a longitudinal direction of the frame segment (108) from a retracted position to a deployed position where the bracket member (212, 312) is out of a gap between the two frame segments (108), wherein the bracket member when in the deployed position has a surface (256, 356) that blocks opening of the attachment member such that detachment of the attachment member from the frame segment is prevented; and
placing the infant carrier on a front end of the bracket member (212, 312) in the deployed position.

15. The method according to claim 14, further comprising rotating the bracket member (212, 312) in an opposite direction until the bracket member reaches the retracted position lying substantially parallel to the plane passing through the two frame segments (108) and in the gap between the two frame segments.

## Patentansprüche

1. System mit einer Tragstruktur (100) und einer Babyschale (101), die dazu angepasst ist, an der Tragstruktur angebracht zu werden, wobei die Tragstruktur (100) zwei voneinander beabstandete parallele rohrförmige Segmente (108) hat, und das System darüber hinaus ein Befestigungsteil (214, 314), das dazu angepasst ist, eine Befestigung mit einem Abschnitt eines der rohrförmigen Segmente (108) einzugehen, und ein Konsolenteil (212, 312) aufweist, das beweglich mit dem Befestigungsteil (214, 314) verbunden ist, **dadurch gekennzeichnet, dass** das Konsolenteil (212, 312) betätigt werden kann, um sich um eine Achse, die im Wesentlichen parallel zu einer Längsrichtung des Abschnitts ist, aus einer zurückgezogenen Position in eine Einsatzposition zu drehen, die dazu angepasst ist, die Halterung der Babyschale (101) aufzunehmen, wobei ein Lösen des Befestigungsteils (214, 314) vom Abschnitt des rohrförmigen Segments durch das Konsolenteil (212, 312) blockiert wird, wenn sich das Konsolenteil (212, 312) in der Einsatzposition befindet.

2. System nach Anspuch 1, wobei die Tragstruktur (100) einen Kinderwagen umfasst.

3. System nach Anspruch 1 oder 2, wobei die Babyschale (101) einen Kindersitz umfasst.

4. System nach einem der Ansprüche 1 bis 3, **dadurch gekennzeichnet, dass** das Befestigungsteil (214, 314) einen ersten Hülsenabschnitt (216, 316) und einen zweiten Hülsenabschnitt (218, 318) aufweist, die über eine erste Gelenkverbindung (224, 324) schwenkbeweglich miteinander verbunden sind.

5. System nach Anspruch 4, **dadurch gekennzeichnet, dass** das Konsolenteil (212, 312) über eine zweite Gelenkverbindung (252, 352) schwenkbeweglich mit dem zweiten Hülsenabschnitt (218, 318) verbunden ist.

6. System nach Anspruch 5, **dadurch gekennzeichnet, dass** sich die zweite Gelenkverbindung (252, 352) auf einer der ersten Gelenkverbindung (224, 324) entgegengesetzten Seite des zweiten Hülsenabschnitts (218, 318) befindet.

7. System nach Anspruch 5, **dadurch gekennzeichnet, dass** das Befestigungsteil (214, 314) eine Sperrklinke (226, 228, 230, 326, 330) hat, die dazu angepasst ist, den ersten Hülsenabschnitt (216, 316) mit dem zweiten Hülsenabschnitt (218, 318) zu versperren, wenn der erste und zweite Hülsenabschnitt durch eine Drehung um die erste Gelenkverbindung (224, 324) aneinander geschlossen sind.

8. System nach Anspruch 7, **dadurch gekennzeichnet, dass** die Sperrklinke einen erhöhten Teilbereich (230, 330) am zweiten Hülsenabschnitt (218, 318) und eine Raste (226, 326) hat, die am ersten Hülsenabschnitt (216, 316) ausgebildet und dazu angepasst ist, einen Eingriff mit dem erhöhten Teilbereich (230, 330) einzugehen.

9. System nach Anspruch 8, **dadurch gekennzeichnet, dass** die zweite Gelenkverbindung (252, 352) durch den erhöhten Teibereich (230, 330) gebildet ist.

10. System nach Anspruch 8, **dadurch gekennzeichnet, dass**, wenn das Konsolenteil (312) zum Befestigungsteil (314) hin gedreht wird, das Konsolenteil (312) eine Fläche (356) hat, die mit dem ersten Hülsenabschnitt (316) in Kontakt kommt, um die Raste (326) in Eingriff mit dem erhöhten Teilbereich (330) zu drücken.

11. System nach Anspruch 5, **dadurch gekennzeichnet, dass**, wenn das Konsolenteil (212, 312) in die Einsatzposition gedreht wird, um den Einbau der Babyschale aufzunehmen, eine Fläche (256, 356) des Konsolenteils (212, 312) ein Öffnen des ersten und zweiten Hülsenabschnitts blockiert, die aneinander geschlossen sind.

12. System nach Anspruch 11, **dadurch gekennzeichnet, dass** die Fläche (256, 356) des Konsolenteils (212, 312) auf einer dem zweiten Hülsenabschnitt (218, 318) entgegengesetzten Seite des ersten Hülsenabschnitts (216, 316) liegt, wenn sich das Konsolenteil (212, 312) in der Einsatzposition befindet.

13. System nach Anspruch 5, **dadurch gekennzeichnet, dass**, wenn das Konsolenteil (212, 312) in die zurückgezogene Position gedreht wird, die Fläche (256, 356) des Konsolenteils (212, 312) vom ersten Hülsenabschnitt (216, 316) weg bewegt wird, um ein Öffnen des ersten und zweiten Hülsenabschnitts zuzulassen.

14. Verfahren zum Anbringen einer Babyschale an einer Tragstruktur, wobei die Tragstruktur (100) zwei parallele und voneinander beabstandete Rahmensegmente (108) hat, wobei mindestens eines der zwei Rahmensegmente (108) mit einer Konsolenanordnung angebracht ist, die ein mit dem Rahmensegment (108) gesichertes Befestigungsteil (214, 314) und ein mit dem Befestigungsteil (214, 314) verbundenes Konsolenteil (212, 312) hat, wobei das Verfahren umfasst:
Drehen des Konsolenteils (212, 312) um eine zu einer Längsrichtung des Rahmensegments (108) im Wesentlichen parallelen Achse von einer zurückgezogenen Position in eine Einsatzposition, in der sich das Konsolenteil (212, 312) außerhalb eines Zwischenraums zwischen den zwei Rahmensegmenten (108) befindet, wobei das Konsolenteil, wenn es sich in der Einsatzposition befindet, eine Fläche (256, 356) hat, die ein Öffnen des Befestigungsteils derart blockiert, dass ein Lösen des Befestigungsteils vom Rahmensegment verhindert ist; und
Aufsetzen der Babyschale an einem vorderen Ende des Konsolenteils (212, 312) in der Einsatzposition.

15. Verfahren nach Anspruch 14, darüber hinaus umfassend, das Konsolenteil (212, 312) in eine entgegengesetzte Richtung zu drehen, bis das Konsolenteil die zurückgezogene Position erreicht, die im Wesentlichen parallel zu der Ebene liegt, die durch die zwei Rahmensegmente (108) und im Zwischenraum zwischen den zwei Rahmensegmenten verläuft.

## Revendications

1. Système incluant une structure de support (100), et un porte-nourrisson (101) apte à être monté sur la structure de support, sachant que la structure de support (100) inclut deux segments tubulaires (108) parallèles espacés l'un de l'autre, et le système comprenbant en outre un élément d'attache (214, 314) apte à s'attacher à une section d'un des segments tubulaires (108), et un élément console (212, 312) couplé de façon mobile à l'élément d'attache (214, 314), **caractérisé en ce que** l'élément console (212, 312) est manoeuvrable pour tourner autour d'un axe sensiblement parallèle à une direction longitudinale de la section depuis une position rétractée à une position déployée apte à recevoir le montage du porte-nourrisson (101), sachant que le détachement de l'élément d'attache (214, 314) de la section du segment tubulaire est bloqué par l'élément console (212, 312) lorsque l'élément console (212, 312) est dans la position déployée.

2. Le système selon la revendication 1, sachant que la structure de support (100) inclut une poussette.

3. Le système selon l'une quelconque des revendications 1 à 2, sachant que le porte-nourrisson (101) inclut un siège d'enfant.

4. Le système selon l'une quelconque des revendications 1 à 3, **caractérisé en ce que** l'élément d'attache (214, 314) comprend une première section de manchon (216, 316) et une deuxième section de manchon (218, 318) couplées de façon pivotante l'une à l'autre via une première liaison pivot (224, 324).

5. Le système selon la revendication 4, **caractérisé en ce que** l'élément console (212, 312) est couplé de façon pivotante à la deuxième section de manchon (218, 318) via une deuxième liaison pivot (252, 352).

6. Le système selon la revendication 5, **caractérisé en ce que** la deuxième liaison pivot (252, 352) est située d'un côté de la deuxième section de manchon (218, 318) à l'opposé de la première liaison pivot (224, 324).

7. Le système selon la revendication 5, **caractérisé en ce que** l'élément d'attache (214, 314) inclut un verrou (226, 228, 230, 326, 330) apte à verrouiller la première section de manchon (216, 316) avec la deuxième section de manchon (218, 318) lorsque la première et la deuxième section de manchon sont refermées l'une sur l'autre par rotation autour de la première liaison pivot (224, 324).

8. Le système selon la revendication 7, **caractérisé en ce que** le verrou inclut une partie surélevée (230, 330) sur la deuxième section de manchon (218, 318), et une prise (226, 326) formée sur la première section de manchon (216, 316) et apte à se mettre en prise avec la partie surélevée (230, 330) .

9. Le système selon la revendication 8, **caractérisé en ce que** la deuxième liaison pivot (252, 352) est formée à travers la partie surélevée (230, 330).

10. Le système selon la revendication 8, **caractérisé en ce que**, lorsque l'élément console (312) est tourné vers l'élément d'attache (314), l'élément console (312) présente une surface (356) qui entre en contact avec la première section de manchon (316) afin de pousser la prise (326) à se mettre en prise avec la partie surélevée (330).

11. Le système selon la revendication 5, **caractérisé en ce que**, lorsque l'élément console (212, 312) est tourné vers la position déployée afin de recevoir la mise en place du porte-nourrisson, une surface (256, 356) de l'élément console (212, 312) bloque l'ouverture de la première et de la deuxième section de manchon refermées l'une sur l'autre.

12. Le système selon la revendication 11, **caractérisé en ce que** la surface (256, 356) de l'élément console (212, 312) se situe d'un côté de la première section de manchon (216, 316) à l'opposé de la deuxième section de manchon (218, 318) lorsque l'élément console (212, 312) est dans la position déployée.

13. Le système selon la revendication 5, **caractérisé en ce que**, lorsque l'élément console (212, 312) est tourné vers la position rétractée, la surface (256, 356) de l'élément console (212, 312) est écartée de la première section de manchon (216, 316) pour permettre l'ouverture de la première et de la deuxième section de manchon.

14. Procédé de montage d'un porte-nourrisson sur une structure de support, sachant que la structure de support (100) inclut deux segments de cadre (108) parallèles et espacés l'un de l'autre, au moins un des deux segments de cadre (108) étant monté avec un ensemble console qui inclut un élément d'attache (214, 314) arrêté avec le segment de cadre (108), et un élément console (212, 312) couplé à l'élément d'attache (214, 314), le procédé comprenant :
la rotation de l'élément console (212, 312) autour d'un axe sensiblement parallèle à une direction longitudinale du segment de cadre (108) depuis une position rétractée à une position déployée où l'élément console (212, 312) est hors d'un intervalle entre les deux segments de cadre (108), sachant que l'élément console, lorsqu'il est dans la position déployée, présente une surface (256, 356) qui bloque l'ouverture de l'élément d'attache de telle sorte qu'un détachement de l'élément d'attache du segment de cadre soit empêché ; et
la mise en place du porte-nourrisson sur une extrémité avant de l'élément console (212, 312) dans la position déployée.

15. Le procédé selon la revendication 14, comprenant en outre la rotation de l'élément console (212, 312) dans une direction opposée jusqu'à ce que l'élément console atteigne la position rétractée se situant de façon sensiblement parallèle au plan passant par les deux segments de cadre (108) et dans l'intervalle entre les deux segments de cadre.
